# EUROPÄISCHE PATENTSCHRIFT

(11) **EP 3 328 694 B1**
(45) Veröffentlichungstag und Bekanntmachung des Hinweises auf die Patenterteilung: **10.04.2019**
(21) Anmeldenummer: 16726871.3
(22) Anmeldetag: 02.06.2016
(51) Int. Cl.: B60T 8/44, B60T 8/48

(54) **VERFAHREN ZUR EINSTELLUNG DER BREMSPEDALGEGENKRAFT IN EINEM HYDRAULISCHEN BREMSSYSTEM**
METHOD FOR ADJUSTING THE BRAKE PEDAL COUNTERFORCE IN A HYDRAULIC BRAKING SYSTEM
PROCÉDÉ DE RÉGLAGE DE LA FORCE ANTAGONISTE D'UNE PÉDALE DE FREIN DANS UN SYSTÈME DE FREINAGE HYDRAULIQUE

(30) Priorität: 31.07.2015 DE 102015214571
(43) Veröffentlichungstag der Anmeldung: 06.06.2018
(73) Patentinhaber: Robert Bosch GmbH, 70442 Stuttgart (DE)
(72) Erfinder: VOLLERT, Herbert, 71665 Vaihingen/Enz (DE); SCHARBAK, Rami, 71726 Benningen (DE); TOKIC, Branimir, 71672 Marbach am Neckar (DE)
(86) Internationale Anmeldenummer: PCT/EP2016/062565
(87) Internationale Veröffentlichungsnummer: WO 2017/021027

(56) Entgegenhaltungen:
- WO-A1-96/14228
- WO-A1-2006/029979
- DE-A1- 3 813 174
- DE-A1- 3 910 285
- DE-A1-102012 223 898

## Beschreibung

Die Erfindung bezieht sich auf ein Verfahren zur Einstellung der Bremspedalgegenkraft in einem hydraulischen Bremssystem.

### Stand der Technik

Aus der DE 10 2009 046 339 A1 ist ein hydraulisches Bremssystem in einem Fahrzeug mit zwei Bremskreisen zur Versorgung von Radbremseinheiten mit hydraulischem Bremsfluid bekannt. Die Bremskreise sind an einem gemeinsamen Hauptbremszylinder angeschlossen, aus dem bei einer Betätigung des Bremspedals das Bremsfluid in die Bremskreise gefördert wird.

In jedem Bremskreis befindet sich eine Hydraulikpumpe, die Bestandteil eines Antiblockiersystems bzw. eines elektronisches Stabilitätsprogramms ist, über das ein selbsttätiger Eingriff in das Bremssystem durchgeführt werden kann. Bei aktivierter Hydraulikpumpe wird Bremsfluid aus dem Hauptbremszylinder in die Bremskreise gefördert. Betätigt zugleich der Fahrer das Bremspedal mit einer nur geringen Pedalgeschwindigkeit, so besteht die Gefahr, dass der Hydraulikdruck im Hauptbremszylinder und damit auch die Pedalgegenkraft absinkt. Der Fahrer spürt trotz gleichbleibender oder ansteigender Bremswirkung einen geringeren Pedalwiderstand, was als irritierend empfunden werden kann.

Die WO 2006/029979 A1 offenbart, dass die Fördermenge einer Pumpe in einem hydraulischen Bremssystem in der Weise eingestellt wird, dass die Differenz zwischen den von einem Hauptbremszylinder abfließenden und den dem Hauptbremszylinder zufließenden Druckmittelströmen einen Minimalwert ergibt.

Vorzugsweise sind die Druckmittelströme gleich groß, so dass die Differenz bei null liegt.

In der DE 10 2012 223 898 A1 wird ein Verfahren zum Betreiben eines hydraulischen Bremssystems eines Kraftfahrzeugs beschrieben. Falls bei einer Betätigung des Bremspedals ein Mindestweg des Pedals unterschritten wird, wird eine Druckerzeugungseinrichtung zum Aufbau eines zusätzlichen Bremsdrucks aktiviert, sofern ein Antiblockiersystem aktuell nicht eingreift.

### Offenbarung der Erfindung

Das erfindungsgemäße Verfahren bezieht sich auf die Einstellung der Bremspedalgegenkraft in einem hydraulischen Bremssystem, das mit einer ansteuerbaren Hydraulikpumpe zur veränderlich einstellbaren Bremskraftverstärkung ausgestattet ist. Das Bremssystem weist mindestens einen Bremskreis auf, in welchem sich mindestens eine Radbremseinheit, vorzugsweise zwei Radbremseinheiten zur Erzeugung von Bremskraft befinden, welche im Bremskreis mit Bremsfluid versorgt werden. Jedem Bremskreis ist eine Hydraulikpumpe zugeordnet, bei deren Betätigung der Druck im Bremskreis moduliert wird. Die Ansteuerung der Hydraulikpumpe kann unabhängig von der Fahrerbetätigung erfolgen. Die Hydraulikpumpe ist bevorzugt Teil eines Fahrerassistenzsystems, insbesondere eines Antiblockiersystems oder eines elektronischen Stabilitätsprogramms ESP.

Das Bremssystem weist einen Hauptbremszylinder auf, aus dem Bremsfluid in den mindestens einen Bremskreis gefördert wird. Bei einer Betätigung des Bremspedals, das ebenfalls Bestandteil des Bremssystems ist, wird Bremsfluid aus einem Hauptbremszylinder in den Bremskreis gefördert. Auch bei einer Betätigung der Hydraulikpumpe im Bremskreis wird Bremsfluid aus dem Hauptbremszylinder in den Bremskreis gefördert.

Die Betätigung des Bremspedals bewirkt eine Bremskraftanforderung, die entweder ausschließlich über die Bremspedalbetätigung und die hierbei entstehende Förderung des Bremsfluids in den Bremskreis oder ergänzend über eine Betätigung der Hydraulikpumpe erfüllt wird. Um zu vermeiden, dass bei einem Einsatz der Hydraulikpumpe der Hydraulikdruck im Hauptbremszylinder so weit absinkt, dass die Bremspedalgegenkraft abfällt, wird bei dem erfindungsgemäßen Verfahren die Hydraulikpumpe in einer geregelten Weise betrieben. Hierbei wird der Hydraulikdruck im Hauptbremszylinder überwacht, insbesondere mithilfe eines Drucksensors, der Teil des Bremssystems ist, wobei die Hydraulikpumpe in der Weise angesteuert wird, dass bei Betätigung des Bremspedals ein Mindestdruck im Hauptbremszylinder nicht oder zumindest nicht wesentlich unterschritten wird.

Bei der in dieser Weise durchgeführten Betätigung der Hydraulikpumpe ist sichergestellt, dass unter allen Bedingungen die Bremspedalgegenkraft einen Wert einnimmt, der vom Fahrer erwartet wird, so dass ein für den Fahrer plausibler Zusammenhang zwischen Bremspedalbetätigung,

Bremspedalgegenkraft und Bremskraft gegeben ist. Der Mindestdruck, der im Hauptbremszylinder nicht unterschritten werden darf, gewährleistet eine ausreichend hohe Bremspedalgegenkraft und hilft somit, Irritationen des Fahrers insbesondere während einer Betätigung der Hydraulikpumpe zu vermeiden.

Gemäß einer vorteilhaften Ausführung wird der Mindestdruck, der im Hauptbremszylinder nicht oder nicht wesentlich unterschritten werden soll, aus dem maximalen Förderdruck eines elektrisch betätigbaren Bremskraftverstärkers ermittelt. Der Bremskraftverstärker kann einen Elektromotor umfassen, welcher bevorzugt über ein Getriebe den Hauptbremszylinder betätigt (iBooster). Der im Hauptbremszylinder einzustellende Mindestdruck kann ggf. geringer sein als der maximale Förderdruck des elektrisch betätigbaren Bremskraftverstärkers, wobei das Maß, um das der Mindestdruck geringer ist als der maximale Förderdruck, eine Konstante sein oder von der aktuellen Fahrsituation abhängen kann.

Die Einhaltung des Mindestdrucks im Hauptbremszylinder wird über eine Ansteuerung der Hydraulikpumpe erreicht, um den Abfluss aus dem Hauptbremszylinder, der auf die Hydraulikpumpe zurückgeht, mit dem Zufluss über die Betätigung des Bremspedals zumindest annähernd im Gleichgewicht zu halten und den Mindestdruck im Hauptbremszylinder aufrechterhalten zu können. Die Einstellung des Radbremsdrucks an den Radbremseinheiten erfolgt durch eine Betätigung der Hydraulikpumpe und ggf. eine Betätigung von Ventilen im Bremssystem.

Der Mindestdruck im Hauptbremszylinder kann während einer Regelung des Raddrucks kurzzeitig unterschritten werden, nachdem die Hydraulikpumpe aktiviert worden ist und Bremsfluid aus dem Hauptbremszylinder abgesaugt wurde. Mit dem Unterschreiten des Mindestdrucks im Hauptbremszylinder wird die Aktivität der Hydraulikpumpe gedrosselt oder komplett abgeschaltet, so dass der Hydraulikdruck im Hauptbremszylinder aufgrund der Bremspedalbetätigung durch den Fahrer wieder ansteigt. Übersteigt der Hydraulikdruck im Hauptbremszylinder wieder den zugeordneten Mindestdruck, so wird die Hydraulikpumpe wieder aktiviert bzw. die Aktivität gesteigert.

Gemäß einer weiteren zweckmäßigen Ausführung hängt die Ansteuerung der Hydraulikpumpe zur Gewährleistung des Mindestdrucks im Hauptbremszylinder von der Bremspedalgeschwindigkeit ab. Bei einer nur langsamen Betätigung des Bremspedals und einer entsprechend geringen Bremspedalgeschwindigkeit bei zugleich aktiver Hydraulikpumpe kann ein Druckabfall im Hauptbremszylinder entstehen, da das Bremspedal langsamer nachgeführt wird als Bremsfluid über die Hydraulikpumpe aus dem Hauptbremszylinder abgezogen wird. Wird die Bremspedalgeschwindigkeit überwacht, beispielsweise über einen Pedalwegsensor, so kann die Bremspedalgeschwindigkeit für die Regelung der Hydraulikpumpe herangezogen werden. Übersteigt die Bremspedalgeschwindigkeit einen Schwellenwert, so kann von einer ausreichend schnellen Nachführung des Bremspedals auch bei aktivierter Hydraulikpumpe ausgegangen werden. In diesem Fall ist es nicht erforderlich, mit dem erfindungsgemäßen Verfahren in das Bremssystem einzugreifen, um den Mindestdruck im Hauptbremszylinder sicherzustellen.

Unterschreitet jedoch die Bremspedalgeschwindigkeit den Schwellenwert, kann bei aktivierter Hydraulikpumpe keine ausreichend schnelle Nachführung des Bremspedals gewährleistet werden. In diesem Fall wird der Hydraulikdruck im Hauptbremszylinder und damit auch die Bremspedalgegenkraft in der erfindungsgemäßen Weise geregelt.

Es kommen verschiedene Regelstrategien zur Ansteuerung der Hydraulikpumpe in Betracht. Die Regelung kann auf kontinuierliche oder auf diskontinuierliche Weise, beispielsweise als 2-Punkt-Regelung durchgeführt werden. Die Regelung erfolgt entweder ausschließlich auf kontinuierliche oder ausschließlich auf diskontinuierliche Weise oder, in einer alternativen Ausführung, druckabhängig sowohl auf kontinuierliche oder diskontinuierliche Weise. Im letztgenannten Fall werden druckabhängig verschiedene Regelstrategien angewandt, indem zum Beispiel bei einem geringeren Druckniveau im Hauptbremszylinder eine 2-Punkt-Regelung und bei einem höheren Druckniveau im Hauptbremszylinder eine kontinuierliche Regelung durchgeführt wird.

Während der aktiven Regelung liegt der Raddruck, gemäß einer weiteren vorteilhaften Ausführung, zwischen einem Mindestdruck, der z.B. aus dem aktuellen Pedalweg errechnet wird, und einem Maximal- oder Zieldruck, der aus dem Fahrerwunsch ermittelt wird, wobei hierauf noch ein zusätzlicher Wert addiert wird, welcher beispielsweise von dem aktuellen Zustand des Bremssystems abhängen kann. Der zusätzliche Wert ist beispielsweise ein vorgebbarer Anteil des Fahrerwunsches.

Die verschiedenen Verfahrensschritte werden in einem Regel- bzw. Steuergerät durchgeführt, das vorteilhafterweise Bestandteil des Bremssystems ist. Das Regel- bzw. Steuergerät steuert die verschiedenen, einstellbaren Komponenten des Bremssystems an, unter anderem Hydraulikventile und die Hydraulikpumpe bzw. einen Pumpenmotor, der die Hydraulikpumpe antreibt. Das Bremssystem weist mindestens einen Bremskreis, bevorzugt zwei Bremskreise auf, wobei in jedem Bremskreis mindestens eine Radbremseinheit, bevorzugt zwei Radbremseinheiten sowie eine Hydraulikpumpe angeordnet sind.

Weitere Vorteile und zweckmäßige Ausführungen sind den weiteren Ansprüchen, der Figurenbeschreibung und den Zeichnungen zu entnehmen. Es zeigen:
- Fig. 1: einen hydraulischen Schaltplan eines Bremssystems in einem Fahrzeug,
- Fig. 2: ein Blockschaltbild mit Eingangs- und Ausgangsgrößen der Regelung zur Einstellung der Bremspedalgegenkraft,
- Fig.3: ein Schaubild mit dem Pedalwegverlauf sowie dem Verlauf verschiedener Druckgrößen.

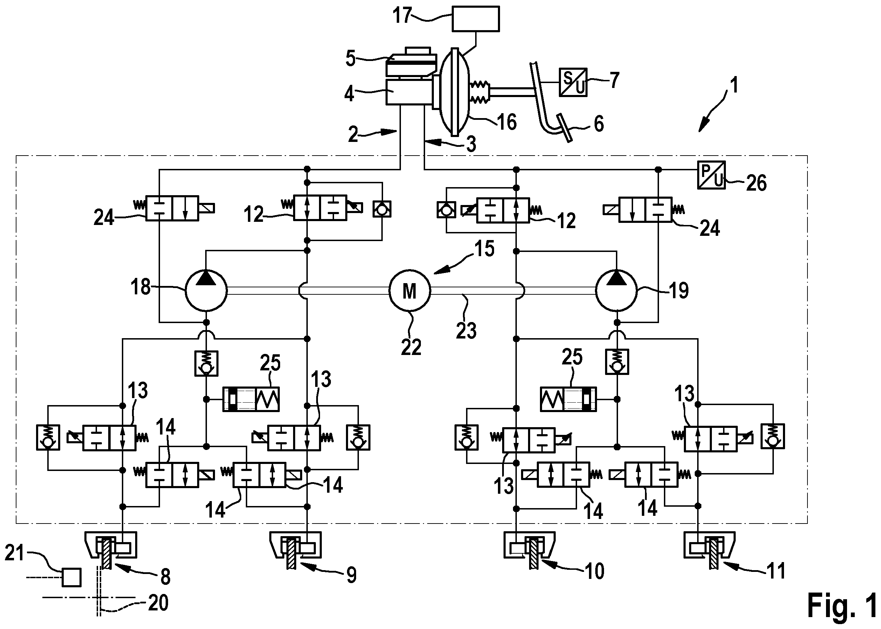

Das im Hydraulikschaltplan gemäß Fig. 1 dargestellte hydraulische Bremssystem 1 weist einen Vorderachs-Bremskreis 2 und einen Hinterachs-Bremskreis 3 zur Versorgung von Radbremseinheiten 8 und 9 an den Vorderrädern bzw. 10 und 11 an den Hinterrädern mit hydraulischem Bremsfluid auf. Grundsätzlich kommen auch Bremssysteme in Betracht, bei denen die Bremskreisaufteilung diagonal ist, so dass pro Bremskreis eine Radbremseinheit an einem Vorderrad und einem Hinterrad vorgesehen ist.

Die beiden Bremskreise 2, 3 sind an einem gemeinsamen Hauptbremszylinder 4 angeschlossen, der über einen Bremsflüssigkeitsvorratsbehälter 5 mit Bremsfluid versorgt wird. Der Hauptbremszylinder 4 wird vom Fahrer über das Bremspedal 6 betätigt, der vom Fahrer ausgeübte Pedalweg wird über einen Pedalwegsensor 7 gemessen. Zwischen dem Bremspedal 6 und dem Hauptbremszylinder 4 befindet sich ein Bremskraftverstärker 16, der beispielsweise einen Elektromotor umfasst, welcher bevorzugt über ein Getriebe den Hauptbremszylinder 4 betätigt (iBooster). Die vom Pedalwegsensor 7 gemessene Stellbewegung des Bremspedals 6 wird als Sensorsignal an ein Steuergerät 17 des Bremskraftverstärkers 16 übermittelt, in welchem Stellsignale zur Ansteuerung des Bremskraftverstärkers 16 erzeugt werden. Über das Steuergerät 17 werden auch die weiteren einstellbaren Komponenten des Bremssystems 1 angesteuert.

In jedem Bremskreis 2, 3 ist ein Umschaltventil 12 angeordnet, das im Strömungsweg zwischen dem Hauptbremszylinder 4 und den jeweiligen Radbremseinheiten 8 und 9 bzw. 10 und 11 liegt. Die Umschaltventile 12 sind in ihrer stromlosen Grundstellung geöffnet. Jedem Umschaltventil 12 ist ein parallel geschaltetes Rückschlagventil zugeordnet, das in Richtung der jeweiligen Radbremseinheit durchströmbar ist.

Zwischen den Umschaltventilen 12 und den jeweiligen Radbremseinheiten 8, 9 bzw. 10, 11 befinden sich Einlassventile 13, die ebenfalls stromlos geöffnet und denen Rückschlagventile zugeordnet sind, welche in Gegenrichtung, also von den Radbremseinheiten in Richtung zum Hauptbremszylinder 4 durchströmbar sind.

Jeder Radbremseinheit 8, 9 bzw. 10, 11 ist jeweils ein Auslassventil 14 zugeordnet, das stromlos geschlossen ist. Die Auslassventile 14 sind jeweils mit der Saugseite einer Pumpeneinheit 15 verbunden, die in jeden Bremskreis 2, 3 eine Hydraulikpumpe 18 bzw. 19 aufweist. Der Pumpeneinheit ist ein elektrischer Antriebs- bzw. Pumpenmotor 22 zugeordnet, der über eine Welle 23 beide Hydraulikpumpen 18 und 19 betätigt. Die Druckseite der Hydraulikpumpe 18 bzw. 19 ist an einen Leitungsabschnitt zwischen dem Umschaltventil 12 und den beiden Einlassventilen 13 pro Bremskreis angeschlossen.

Die Saugseiten der Hydraulikpumpen 18 und 19 sind jeweils mit einem Hochdruck-Schaltventil 24 verbunden, das an den Hauptbremszylinder 4 hydraulisch angeschlossen ist. Bei einem fahrdynamischen Regeleingriff können für einen schnellen Bremsdruckaufbau die im stromlosen Zustand geschlossenen Hochdruck-Schaltventile 24 geöffnet werden, so dass die Hydraulikpumpen 18 und 19 unmittelbar aus dem Hauptbremszylinder 4 Hydraulikfluid ansaugen. Dieser Bremsdruckaufbau kann unabhängig von einer Betätigung des Bremssystems durch den Fahrer durchgeführt werden. Die Pumpeneinheit 15 mit den beiden Hydraulikpumpen 18 und 19, dem elektrischen Pumpenmotor 22 und der Welle 23 gehört zu einem Fahrerassistenzsystem und ist Bestandteil eines elektronischen Stabilitätsprogramms (ESP) oder eines Antiblockiersystems (ABS). Der elektrische Pumpenmotor 22 wird von Stellsignalen des Steuergeräts 17 - oder gegebenenfalls eines weiteren Steuergeräts - eingestellt.

Zwischen den Auslassventilen 14 und der Saugseite der Hydraulikpumpen 18 und 19 befindet sich pro Bremskreis 2, 3 eine Speicherkammer 25, die zur Zwischenspeicherung von Bremsflüssigkeit dient, welche während eines fahrdynamischen Eingriffs durch die Auslassventile 14 aus den Radbremseinheiten 8, 9 bzw. 10, 11 ausgelassen wird. Jeder Speicherkammer 25 ist ein Rückschlagventil zugeordnet, das in Richtung der Saugseiten der Hydraulikpumpen 18, 19 öffnet. Auch die Speicherkammern 25 gehören zum elektronischen Stabilitätsprogramm (ESP).

Zur Druckmessung ist ein Drucksensor 26 im Bremskreis 3 benachbart zum Hauptbremszylinder 4 angeordnet.

Das Bremssystem 1 ist außerdem an jedem Fahrzeugrad 20 mit einem Raddrehzahlsensor 21 ausgestattet, mit dem die jeweilige Raddrehzahl ermittelt werden kann. Das Sensorsignal des Raddrehzahlsensors 21 wird dem Steuergerät 17 als Eingangssignal zugeführt, in welchem Stellsignale zur Einstellung des elektrischen Pumpenmotors 22 erzeugt werden. Jedem Fahrzeugrad ist ein Raddrehzahlsensor zugeordnet, dessen Sensorsignale dem Steuergerät 17 zugeleitet werden.

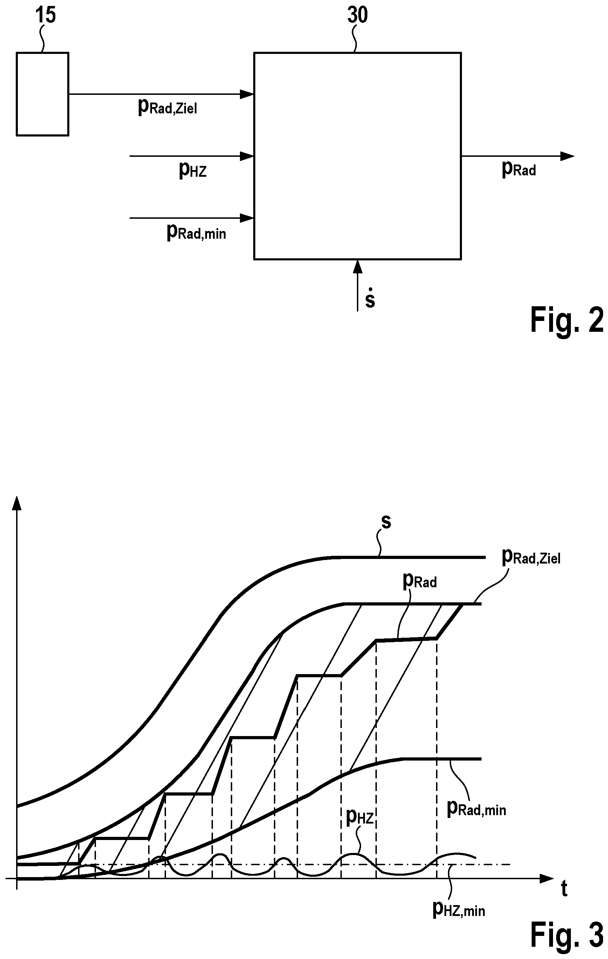

Das Blockschaltdiagramm gemäß Fig. 2 zeigt als Prinzipbild die Einstellung der Bremspedalgegenkraft im hydraulischen Bremszylinder für den Fall, dass eine oder beide Hydraulikpumpen im Bremskreis aktiviert werden, während der Fahrer das Bremspedal betätigt. In einem Regelblock 30 wird die Bremspedalgegenkraft im Hauptzylinder eingestellt, indem der Hydraulikdruck p_{HZ} im Hauptbremszylinder, zu dem die Bremspedalgegenkraft proportional ist, eingestellt wird. Ein Regelungsbedarf entsteht für den Fall, dass das Bremspedal vom Fahrer mit einer verhältnismäßig geringen Bremspedalgeschwindigkeit *ṡ* betätigt wird und zugleich die Hydraulikpumpe 18,19 im Bremskreis aktiv ist. Hierbei kann die Situation eintreten, dass der Hydraulikdruck p_{HZ} im Hauptbremszylinder aufgrund der langsamen Nachführbewegung des Bremspedals absinkt, was zu einer entsprechenden Reduzierung der Bremspedalgegenkraft führt und mit einem nicht-plausiblen Zusammenhang zwischen Bremspedalbetätigung und Bremswirkung einhergeht. Um dies zu vermeiden, wird im Regelblock 30 der Raddruck p_{Rad} unter Berücksichtigung des Hydraulikdrucks p_{HZ} im Hauptbremszylinder eingeregelt, der einen Mindestdruck p_{HZ,min} im Hauptbremszylinder oder zumindest nicht wesentlich unterschreiten darf. Der Mindestdruck p_{HZ,min} im Hauptbremszylinder hängt von der aktuell aktiven Funktion ab, beispielsweise von der Aktivierung eines Bremskraftverstärkers (iBooster) oder eines elektronischen Bremsassistenten. Ist der Bremskraftverstärker aktiv, so ist der Mindestdruck p_{HZ,min} vorzugsweise geringer als der maximale Förderdruck pᵣᵤₙₒᵤₜ des Bremskraftverstärkers, wobei das Maß, um das der Mindestdruck geringer ist als der maximale Förderdruck Pᵣᵤₙₒᵤₜ, eine Konstante sein kann. Ist ein elektronischer Bremsassistent aktiv, so hängt der Mindestdruck p_{HZ,min} beispielsweise vom Gradienten der Bremspedalbetätigung oder einer gewünschten minimalen Bremspedalgegenkraft ab.

Der aktuell herrschende Hauptzylinderdruck p_{HZ} wird gemessen und als Eingangsgröße dem Regelblock 30 zugeführt, ebenso wie ein Radmindestdruck p_{Rad,min}, der aus dem Bremspedalweg ermittelt wird. Des Weiteren geht als Eingangsgröße ein Zieldruck p_{Rad,Ziel} ein, der aus dem Fahrerwunsch ermittelt wird, wobei hierauf noch ein zusätzlicher konstanter Wert addiert wird.

Als zusätzliche Bedingung kann im Regelblock 30 ggf. die Bremspedalgeschwindigkeit *ṡ* berücksichtigt werden. Liegt die Bremspedalgeschwindigkeit *ṡ* unter einem zugeordneten Schwellenwert, so wird die Regelung mit einer Ansteuerung der Hydraulikpumpe zur Gewährleistung des Mindestdrucks p_{Rad,min} im Regelblock 30 durchgeführt. In diesem Fall kann durch die Betätigung des Bremspedals der Verlust an Bremsfluid im Hauptbremszylinder nicht ausgeglichen werden. Erreicht dagegen die Bremspedalgeschwindigkeit *ṡ* den Schwellenwert, so ist die Regelung des Hydraulikdrucks p_{HZ} im Hauptbremszylinder 4 nicht notwendig.

An der Ausgangsseite des Regelblocks 30 liegt der geregelte Raddruck p_{Rad} in den Radbremseinheiten an. Wie dem Schaubild gemäß Fig. 3 zu entnehmen, liegt der geregelte Raddruck p_{Rad} in dem schraffierten Bereich zwischen dem Mindestdruck p_{Rad,min} und dem Zieldruck p_{Rad,Ziel}. Eingetragen ist in dem Schaubild gemäß Fig. 3 außerdem der Pedalweg s und der Hydraulikdruck p_{HZ} im Hauptbremszylinder. Dem Vergleich zwischen dem Pedalweg s und dem geregelten Raddruck p_{Rad} ist zu entnehmen, dass beide Kurven annähernd parallel verlaufen. Die Bremspedalgegenkraft verläuft proportional zu dem Hydraulikdruck p_{HZ}, es besteht ein plausibler Zusammenhang zwischen der Bremspedalbetätigung und der Bremspedalgegenkraft.

Fig. 3 kennzeichnet die Situation, dass der Bremskraftverstärker 16 seinen maximalen Förderdruck pᵣᵤₙₒᵤₜ erreicht hat und der vom Fahrer angeforderte Druck über eine Betätigung der Hydraulikpumpen 18, 19 bereitgestellt wird. Der Raddruck p_{Rad}, der in dem Feld zwischen dem Radmindestdruck p_{Rad,min} und dem Radzieldruck p_{Rad,Ziel} an den Radbremseinheiten eingestellt wird, wird im Wege einer 2-Punkt-Regelung geregelt. In den horizontalen Abschnitten der Treppenkurve des Raddrucks p_{Rad} wird kein Bremsfluid aus dem Hauptbremszylinder in Richtung der Radbremseinheiten abgezogen, in den ansteigenden Abschnitten sind die Hydraulikpumpen 18, 19 aktiv und es werden aktiv Bremsdrücke in den Radbremseinheiten aufgebaut sowie Bremsfluid aus dem Hauptbremszylinder abgezogen. Die Hydraulikpumpen 18, 19 können ggf. aus Komfortgründen auch während der horizontalen Abschnitte der Treppenkurve aktiv bleiben, sie werden jedoch vorzugsweise mit Mindestdrehzahl betrieben, wobei aus dem Hauptbremszylinder abgesaugtes Fluid über die Umschaltventile wieder zurückgeführt werden kann.

Die horizontalen und die ansteigenden Abschnitte in der Treppenkurve des Raddrucks p_{Rad} korrelieren mit dem Schwingungsverlauf des Hydraulikdrucks p_{HZ} im Hauptbremszylinder. Unterschreitet der Hydraulikdruck p_{HZ} einen zugeordneten Mindestdruck p_{Hz, min}, so werden in der 2-Punkt-Regelung des Raddrucks p_{Rad} die Hydraulikpumpen 18, 19 kurzzeitig deaktiviert bzw. die Leistung so weit gedrosselt, dass in der Summe kein Bremsfluid aus dem Hauptbremszylinder abströmt, so dass der Raddruck p_{Rad} konstant bleibt. Überschreitet der Hydraulikdruck p_{HZ} im Hydraulikzylinder den Mindestdruck p_{HZ, min}, so werden die Hydraulikpumpen 18, 19 wieder mit höherer Leistung aktiviert, so dass Bremsfluid aus dem Hauptbremszylinder abströmt und der Raddruck p_{Rad} wieder ansteigt. Dementsprechend ergibt sich im Verlauf des Hydraulikdrucks p_{HZ} im Hauptbremszylinder ein schwingender Verlauf um den Mindestdruck p_{Hz, min}. In den Abschnitten unterhalb des Mindestdrucks p_{Hz, min} kann der Hydraulikdruck p_{HZ} durch die Betätigung des Bremspedals durch den Fahrer und aufgrund der Deaktivierung bzw. Leistungsreduzierung der Hydraulikpumpen bei konstantem Druck in den Radbremseinheiten wieder ansteigen, da kein Bremsfluid aus dem Hauptbremszylinder abströmt. In den Abschnitten oberhalb des Mindestdrucks p_{HZ, min} sinkt der Hydraulikdruck p_{HZ} im Hauptbremszylinder wieder ab, da aufgrund der Aktivierung der Hydraulikpumpen und dem aktiven Druckaufbau in den Radbremseinheiten Bremsfluid aus dem Hauptbremszylinder abgesaugt wird.

Insgesamt ergibt sich bei der 2-Punkt-Regelung über der Zeit ein Ansteigen des Raddrucks p_{Rad} mit einer Annäherung an den Radzieldruck p_{Rad,Ziel}. Zugleich ist gewährleistet, dass der Hydraulikdruck p_{HZ} im Hauptbremszylinder nur geringfügig unter den Mindestdruck p_{HZ, min} absinkt, so dass der Fahrer während eines Bremsvorgangs eine ausreichend hohe Bremspedalgegenkraft im Bremspedal verspürt.

Die Regelung des Hydraulikdrucks p_{HZ} kann druckabhängig auf unterschiedliche Weise durchgeführt werden. Beispielsweise kann in einem unteren Druckbereich eine 2-Punkt-Regelung und in einem oberen Druckbereich eine kontinuierliche Regelung durchgeführt werden.

## Patentansprüche

1. Verfahren zur Einstellung der Bremspedalgegenkraft in einem hydraulischen Bremssystem (1) mit einer ansteuerbaren Hydraulikpumpe (18, 19) zur veränderlich einstellbaren Bremskraftverstärkung, durchzuführen in einem Steuergerät des Bremssystems (1), wobei im Bremsfall Bremsfluid aus einem Hauptbremszylinder (4) in einen Bremskreis (2, 3) des Bremssystems (1) gefördert wird, wobei bei einer Betätigung des Bremspedals (6) die Hydraulikpumpe (18, 19) in der Weise angesteuert wird, dass der Hydraulikdruck (p_{HZ}) im Hauptbremszylinder (4) einen zugeordneten Mindestdruck (p_{Hz,min}) nicht oder nicht wesentlich unterschreitet, **dadurch gekennzeichnet, dass** bei der Regelung der Hydraulikpumpe (18, 19) der Radbremsdruck (p_{Rad}) nur in den Phasen aufgebaut wird, in denen der Hydraulikdruck (p_{HZ}) im Hauptbremszylinder (4) den zugeordneten Mindestdruck (p_{Hz,min}) überschreitet, und dass in den Phasen, in denen der Hydraulikdruck (p_{HZ}) im Hauptbremszylinder (4) den zugeordneten Mindestdruck (p_{Hz,min}) nicht überschreitet, der Radbremsdruck (p_{Rad}) gehalten wird.

2. Verfahren nach Anspruch 1, **dadurch gekennzeichnet, dass** der Mindestdruck (p_{HZ,min}), der im Hauptbremszylinder (4) eingestellt wird, aus dem maximalen Förderdruck (pᵣᵤₙₒᵤₜ) eines elektrisch betätigbaren Bremskraftverstärkers (16) ermittelt wird.

3. Verfahren nach Anspruch 1 oder 2, **dadurch gekennzeichnet, dass** der Mindestdruck (pmin), der im Hauptbremszylinder (4) eingestellt wird, dem durch die aktuelle Betätigung des Bremspedals erzeugten Druck entspricht.

4. Verfahren nach einem der Ansprüche 1 bis 3, **dadurch gekennzeichnet, dass** die Hydraulikpumpe (18, 19) in der Weise angesteuert wird, dass ein Radbremsdruck (p_{Rad}) in einer Radbremseinheit (8, 9, 10,11) zwischen einem Mindestdruck (p_{Rad,min}) und einem Maximaldruck (p_{Rad,Ziel}) liegt.

5. Verfahren nach Anspruch 4, **dadurch gekennzeichnet, dass** der Mindestdruck (p_{Rad,min}) in der Radbremseinheit (8, 9, 10, 11) aus der Bremspedalstellung ermittelt wird.

6. Verfahren nach Anspruch 4 oder 5, **dadurch gekennzeichnet, dass** der Maximaldruck (p_{Rad,Ziel}) in der Radbremseinheit (8, 9, 10, 11) dem einzustellenden Zieldruck entspricht.

7. Verfahren nach einem der Ansprüche 1 bis 6, **dadurch gekennzeichnet, dass** der Radbremsdruck (p_{Rad}) durch eine kontinuierliche oder eine diskontinuierliche Regelung eingestellt wird.

8. Verfahren nach Anspruch 7, **dadurch gekennzeichnet, dass** druckabhängig verschiedene Regelungsstrategien angewandt werden.

9. Verfahren nach Anspruch 7 oder 8, **dadurch gekennzeichnet, dass** der Radbremsdruck (p_{Rad}) durch eine Betätigung der Hydraulikpumpe (18, 19) und eine Betätigung von Ventilen (12, 13, 14, 24) im Bremssystem eingestellt wird.

10. Hydraulisches Bremssystem in einem Fahrzeug mit einem Steuergerät worin das Verfahren nach einem der Ansprüche 1 bis 9 durchgeführt wird, mit einem Hauptbremszylinder (4), mindestens einem Bremskreis (2, 3) mit mindestens einer Radbremseinheit (8, 9, 10, 11) und mindestens einer Hydraulikpumpe (18, 19) sowie mit mindestens einem Drucksensor (26).

11. Bremssystem nach Anspruch 10, **dadurch gekennzeichnet, dass** die Hydraulikpumpe (18, 19) Bestandteil eines elektronischen Stabilitätsprogramms (ESP) ist.

12. Bremssystem nach Anspruch 10 oder 11, **dadurch gekennzeichnet, dass** das Bremssystem (1) zwei Bremskreise (2, 3) mit jeweils einer Hydraulikpumpe (18, 19) umfasst.

13. Steuergerät zur Ansteuerung der einstellbaren Komponenten des Bremssystems (1) nach einem der Ansprüche 10 bis 12.

## Claims

1. Method for adjusting the brake pedal counterforce in a hydraulic brake system (1) comprising an actuable hydraulic pump (18, 19) for carrying out variably adjustable brake force boosting in a controller of the brake system (1), wherein, in the event of braking, brake fluid is delivered from a master brake cylinder (4) into a brake circuit (2, 3) of the brake system (1), wherein, when the brake pedal (6) is operated, the hydraulic pump (18, 19) is actuated in such a way that the hydraulic pressure (p_{HZ}) in the master brake cylinder (4) does not fall below or does not fall substantially below an associated minimum pressure (p_{HZ,min}), **characterized in that**, when the hydraulic pump (18, 19) is regulated, the wheel brake pressure (p_{wheel}) is built up only in those phases in which the hydraulic pressure (p_{Hz}) in the master brake cylinder (4) exceeds the associated minimum pressure (p_{Hz,min}), and **in that**, in those phases in which the hydraulic pressure (p_{Hz}) in the master brake cylinder (4) does not exceed the associated minimum pressure (p_{Hz,min}), the wheel brake pressure (p_{wheel}) is maintained.

2. Method according to Claim 1, **characterized in that** the minimum pressure (p_{Hz,min}) which is set in the master brake cylinder (4) is ascertained from the maximum delivery pressure (pᵣᵤₙₒᵤₜ) of an electrically operable brake force booster (16).

3. Method according to Claim 1 or 2, **characterized in that** the minimum pressure (pₘᵢₙ) which is set in the master brake cylinder (4) corresponds to the pressure which is generated by the current operation of the brake pedal.

4. Method according to one of Claims 1 to 3, **characterized in that** the hydraulic pump (18, 19) is actuated in such a way that a wheel brake pressure (p_{wheel}) in a wheel brake unit (8, 9, 10, 11) lies between a minimum pressure (p_{wheel,min}) and a maximum pressure (p_{wheel,target}).

5. Method according to Claim 4, **characterized in that** the minimum pressure (p_{wheel,min}) in the wheel brake unit (8, 9, 10, 11) is ascertained from the brake pedal position.

6. Method according to Claim 4 or 5, **characterized in that** the maximum pressure (p_{wheel, target}) in the wheel brake unit (8, 9, 10, 11) corresponds to the target pressure to be set.

7. Method according to one of Claims 1 to 6, **characterized in that** the wheel brake pressure (p_{wheel}) is adjusted by continuous or intermittent regulation.

8. Method according to Claim 7, **characterized in that** different regulation strategies are employed depending on pressure.

9. Method according to Claim 7 or 8, **characterized in that** the wheel brake pressure (p_{wheel}) is adjusted by operating the hydraulic pump (18, 19) and operating valves (12, 13, 14, 24) in the brake system.

10. Hydraulic brake system in a vehicle comprising a controller, in which the method according to one of Claims 1 to 9 is carried out, comprising a master brake cylinder (4), at least one brake circuit (2, 3) having at least one wheel brake unit (8, 9, 10, 11) and at least one hydraulic pump (18, 19), and also comprising at least one pressure sensor (26).

11. Brake system according to Claim 10, **characterized in that** the hydraulic pump (18, 19) is a constituent part of an electronic stability programme (ESP).

12. Brake system according to Claim 10 or 11, **characterized in that** the brake system (1) comprises two brake circuits (2, 3) which each have a hydraulic pump (18, 19).

13. Controller for actuating the adjustable components of the brake system (1) according to one of Claims 10 to 12.

## Revendications

1. Procédé pour ajuster la force antagoniste d'une pédale de frein dans un système de frein hydraulique (1) comprenant une pompe hydraulique commandable (18, 19) pour l'amplification, ajustable de manière variable, de la force de freinage, devant être mis en oeuvre dans un appareil de commande du système de frein (1), dans lequel, en cas de freinage, du fluide de frein est refoulé hors d'un cylindre de frein principal (4) dans un circuit de frein (2, 3) du système de frein (1), dans le cas d'un actionnement de la pédale de frein (6), la pompe hydraulique (18, 19) est commandée de telle sorte que la pression hydraulique (p_{HZ}) dans le cylindre de frein principal (4) ne dépasse pas ou pas sensiblement une pression minimale associée (p_{HZ, min}), **caractérisé en ce que** dans le cas du réglage de la pompe hydraulique (18, 19), la pression de frein de roue (p_{Rad}) est augmentée seulement dans les phases dans lesquelles la pression hydraulique (p_{HZ}) dans le cylindre de frein principal (4) dépasse la pression minimale associée (p_{HZ, min}) et **en ce que** dans les phases dans lesquelles la pression hydraulique (p_{HZ}) dans le cylindre de frein principal (4) ne dépasse pas la pression minimale associée (p_{HZ, min}), la pression de frein de roue (p_{Rad}) est maintenue.

2. Procédé selon la revendication 1, **caractérisé en ce que** la pression minimale (p_{HZ, min}) qui est ajustée dans le cylindre de frein principal (4) est déterminée à partir de la pression de refoulement maximale (pᵣᵤₙₒᵤₜ) d'un servofrein (16) à commande électrique.

3. Procédé selon la revendication 1 ou 2, **caractérisé en ce que** la pression minimale (pₘᵢₙ) qui est ajustée dans le cylindre de frein principal (4) correspond à la pression générée par l'actionnement effectif de la pédale de frein.

4. Procédé selon l'une quelconque des revendications 1 à 3, **caractérisé en ce que** la pompe hydraulique (18, 19) est commandée de telle sorte qu'une pression de frein de roue (p_{Rad}) dans une unité de freins de roues (8, 9, 10, 11) soit située entre une pression minimale (p_{Rad,min}) et une pression maximale (p_{Rad,Ziel}).

5. Procédé selon la revendication 4, **caractérisé en ce que** la pression minimale (p_{Rad,min}) dans l'unité de frein de roue (8, 9, 10, 11) est déterminée à partir de la position de la pédale de frein.

6. Procédé selon la revendication 4 ou 5, **caractérisé en ce que** la pression maximale (p_{Rad,Ziel}) dans l'unité de frein de roue (8, 9, 10, 11) correspond à la pression cible à ajuster.

7. Procédé selon l'une quelconque des revendications 1 à 6, **caractérisé en ce que** la pression de frein de roue (p_{Rad}) est ajustée par une régulation en continu ou discontinu.

8. Procédé selon la revendication 7, **caractérisé en ce qu'**en fonction de la pression, différente stratégies de régulation sont utilisées.

9. Procédé selon la revendication 7 ou 8, **caractérisé en ce que** la pression de frein de roue (p_{Rad}) est ajustée par un actionnement de la pompe hydraulique (18, 19) et par un actionnement de soupapes (12, 13, 14, 24) dans le système de frein.

10. Système de frein hydraulique dans un véhicule comprenant un appareil de commande, le procédé étant mis en oeuvre selon l'une quelconque des revendications 1 à 9, comprenant un cylindre de frein principal (4), au moins un circuit de frein (2, 3) avec au moins une unité de frein de roue (8, 9, 10, 11) et au moins une pompe hydraulique (18, 19) ainsi qu'au moins un capteur de pression (26) .

11. Système de frein selon la revendication 10, **caractérisé en ce que** la pompe hydraulique (18, 19) fait partie d'un programme de stabilité électronique (ESP).

12. Système de frein selon la revendication 10 ou 11, **caractérisé en ce que** le système de frein (1) présente deux circuits de frein (2, 3) ayant chacun une pompe hydraulique (18, 19).

13. Appareil de commande pour commander les composants ajustables du système de frein (1) selon l'une quelconque des revendications 10 à 12.
